(19) Europäisches Patentamt
European Patent Office
Office européen des brevets

(11) EP 4 157 680 B1

(12) # EUROPÄISCHE PATENTSCHRIFT

(45) Veröffentlichungstag und Bekanntmachung des Hinweises auf die Patenterteilung:
**16.07.2025 Patentblatt 2025/29**

(21) Anmeldenummer: **21713368.5**

(22) Anmeldetag: **17.03.2021**

(51) Internationale Patentklassifikation (IPC):
***B60T 8/172*** *(2006.01)*

(52) Gemeinsame Patentklassifikation (CPC):
**B60T 8/171; B60T 8/172; B60T 8/174;**
**B60T 8/17616;** B60T 2210/12; B60T 2270/86

(86) Internationale Anmeldenummer:
**PCT/EP2021/056801**

(87) Internationale Veröffentlichungsnummer:
**WO 2021/244784 (09.12.2021 Gazette 2021/49)**

(54) **VERFAHREN ZUR BESTIMMUNG EINER BREMSDRUCK-ÄNDERUNG**

METHOD FOR DETERMINING A BRAKE PRESSURE CHANGE

PROCÉDÉ DE DÉTERMINATION D’UN CHANGEMENT DE PRESSION DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.06.2020 DE 102020206837**

(43) Veröffentlichungstag der Anmeldung:
**05.04.2023 Patentblatt 2023/14**

(73) Patentinhaber: **Robert Bosch GmbH**
**70442 Stuttgart (DE)**

(72) Erfinder: **SCHARBAK, Rami**
**71726 Benningen (DE)**

(56) Entgegenhaltungen:
**US-A1- 2015 224 970**
**US-A1- 2018 029 568**
**US-A1- 2020 055 511**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 157 680 B1

## Beschreibung

Die Erfindung betrifft ein Verfahren zur Bestimmung einer Bremsdruck-Änderung für ein Rad eines Fahrzeugs zur Optimierung eines Bremsvorgangs.

Stand der Technik

Wird ein maximaler Reibwert zwischen einem Fahrzeugrad und einer Fahrbahn, beispielsweise bei Aquaplaning oder winterlichen Bedingungen, wie starkem Regen, Schnee oder Eis überschritten, droht eine instabile Fahrsituation aufgrund eines Haftungsverlusts des Fahrzeugrades zur Fahrbahn. Für eine Vielzahl von Fahrerassistenzsystemen sowie für teilautomatisierte Fahrzeuge ist es wichtig, den maximalen Reibwert nicht zu überschreiten, um immer einen sicheren Fahrzustand zu gewährleisten oder gegebenenfalls eine automatische Fahrfunktion zu beenden.

Moderne Kraftfahrzeuge weisen Regeleinrichtungen wie Fahrdynamikregelungen (ESP, Elektronisches Stabilitätsprogramm) auf. Dabei stellt das Elektronische Stabilitätsprogramm im Wesentlichen ein Schlupfregelsystem dar. Beim Eintreten von kritischen Fahrsituationen greift dann ein Sicherheitssystem, wie beispielsweise das Antiblockiersystem (ABS) oder ein Traktionskontrollsystem (TCS), ein.

Solche System basieren auf Anti Lock Control (ALC), also einer Bremsdruckregelung mit Auf-, Abbau und halten eines Bremsdruckes, um einem Blockieren der Räder entgegenzuwirken und den Bremsweg zu verkürzen. Aktuelle ALCs haben viele Parameter, um dem Applikationsingenieur die Möglichkeit zu geben, die optimale Performance für verschiede Fahrzeuge erreichen zu können. Die optimalen Werte für diese Parameter zu finden ist aber sehr aufwändig.

Denn der Applikationsingenieur muss unterschiedliche ALC Manöver fahren, ALC mit Vollbremsung triggern, die Messung bewerten und evaluieren welche Parametern von den vielen Parametern angepasst werden sollen, um die Performance zu verbessern und dies vielfach wiederholen bis die Ziel-Performance erreicht ist.

Die Anmeldeschrift US 2015/0224970 A1 beschreibt eine Fahrzeugbremssteuervorrichtung zum Erzeugen eines Hinterradbremsmoments durch einen Elektromotor für eine "Schlupfunterdrückungssteuerung des Hinterrads" zum Reduzieren des Hinterradbremsmoments durch Steuern des Elektromotors basierend auf einer Schlupfzustandsgröße des Hinterrads. Des Weiteren wird eine "Steuerung des plötzlichen Anhaltens" zum schnellen Anhalten der Drehbewegung des Elektromotors auf der Grundlage einer Schlupfzustandsgröße eines Vorderrads beschrieben. Die Steuerung des plötzlichen Anhaltens wird ausgeführt, wenn die Schlupfunterdrückungssteuerung des Hinterrads nicht ausgeführt wird. Bei der Steuerung des plötzlichen Anhaltens kann die "Steuerung zum schrittweisen Ändern eines Erregungsbetrags des Elektromotors auf einen im Voraus festgelegten Erregungsgrenzwert, der einer Verzögerungsrichtung des Elektromotors entspricht", ausgeführt werden. Dementsprechend ist es möglich, übermäßigen Hinterradschlupf aufgrund von Trägheitseinflüssen oder ähnlichem des Elektromotors zu unterdrücken, wenn die Ausführung der Hinterradschlupf-Unterdrückungssteuerung gestartet wird.

Offenbarung der Erfindung

Aufgabe der Erfindung ist die Vereinfachung der Parametersuche für die Anpassung eines Anti Lock Controllers. Ein Controller soll selbstständig die besten Brems-Druckänderung lernen, um ein Rad eines Fahrzeugs stabil zu halten und gleichzeitig einen möglichst kurzen Bremsweg zu realisieren.

Gemäß Aspekten der Erfindung wird ein Verfahren zur Bestimmung einer Bremsdruck-Änderung für ein Rad eines Fahrzeugs zur Optimierung eines Bremsvorgangs, ein Verfahren zur Bestimmung eines Bremsdruck-Kennfelds, Verwendungen des Verfahrens, ein Verfahren zur Ansteuerung, eine Vorrichtung, ein Computerprogramm, sowie ein maschinenlesbares Speichermedium gemäß den Merkmalen der unabhängigen Ansprüche vorgeschlagen, die die oben genannten Aufgaben zumindest zum Teil lösen. Vorteilhafte Ausgestaltungen sind Gegenstand der abhängigen Ansprüche sowie der nachfolgenden Beschreibung.

In dieser gesamten Beschreibung der Erfindung ist die Abfolge von Verfahrensschritten so dargestellt, dass das Verfahren leicht nachvollziehbar ist. Der Fachmann wird aber erkennen, dass viele der Verfahrensschritte auch in einer anderen Reihenfolge durchlaufen werden können und zu dem gleichen oder einem entsprechenden Ergebnis führen. In diesem Sinne kann die Reihenfolge der Verfahrensschritte entsprechend geändert werden.

Gemäß einem Aspekt wird ein Verfahren zur Bestimmung einer Bremsdruck-Änderung für ein Rad eines Fahrzeugs zur Optimierung eines Bremsvorgangs vorgeschlagen, das die folgenden Schritte aufweist:
In einem Schritt des Verfahrens wird ein aktueller Rad-Status des Rades bereitgestellt, wobei der Rad-Status eine Mehrzahl von Statusparametern aufweist. In einem weiteren Schritt wird zumindest ein Statusparameter bestimmt, dessen Wert von einem Ziel-Rad-Status abweicht. In einem weiteren Schritt wird eine Änderungsrichtung der Bremsdruck-Änderung abhängig von einer Abweichung des zumindest einen Statusparameters von dem Ziel-Rad-Status bestimmt. In einem weiteren Schritt wird ein Bremsdruck-Kennfeld zur Bestimmung eines Wertes der Bremsdruck-Änderung bereitgestellt, wobei das Bremsdruck-Kennfeld eine Bremsdruck-Änderung der Mehrzahl der Statusparameter zuordnet und spezifisch für die bestimmte Änderungsrichtung der Bremsdruck-Änderung und Statusparameter-Änderung ist. In einem weiteren Schritt wird ein Wert der Bremsdruck-Änderung mit dem aktuellen Rad-Status und dem bereitgestellten Bremsdruck-Kennfeld bestimmt.

Dabei wird die Mehrzahl von Statusparametern, wie beispielsweise ein Schlupf oder eine Beschleunigung des Rades mittels Signalen bestimmt, die von Sensoren des Fahrzeugs, wie beispielsweise Trägheitssensoren oder Drehzahlsensoren, generiert werden. D. h. der Radzustand kann beispielsweise eine Funktion des Schlupfs und der Beschleunigung des Rades sein:

$$\text{Rad-Zustand} = f(\text{Schlupf}, a\text{Rad})$$

Mittels des Bremsdrucks kann das Bremsmoment eines Rades variiert werden, wobei ein Bremsdruck durch eine Akkumulation von Bremsdruck-Änderungen eingestellt werden kann. Dabei kann die Bremsdruck-Änderung eine Funktion des Rad-Zustands sein.

Dabei ist der Begriff Abweichung in dem Zusammenhang, dass eine Änderungsrichtung der Bremsdruck-Änderung abhängig von einer Abweichung des zumindest einen Statusparameters von dem Ziel-Rad-Status bestimmt wird, breit zu verstehen und umfasst insbesondere sowohl eine quantitative Abweichung im Sinne eines Abstandes als auch eine zeitlich veränderliche Abweichung entsprechend einem Gradienten.

Wie weiter unten erläutert wird, kann das Bremsdruck-Kennfeld mit einem verstärkenden Lern-Verfahren (engl. reinforcement learning) durch Korrekturen von Werten des jeweiligen Bremsdruck-Kennfeldes beim Durchlaufen unterschiedlicher Rad-Status immer weiter optimiert werden. Diese unterschiedlichen Rad-Status können durch einen Applikationsingenieur für ein jeweiliges Fahrzeug in einem entsprechenden Fahrbetrieb eingestellt werden, wobei ein Agent des verstärkenden Lern-Verfahrens entsprechend von Belohnungs-Regeln (Policy) die besten Aktionen in Bezug auf eine Veränderung des Bremsdrucks lernt. Diese besten Aktionen können dann in einem entsprechenden Bremsdruck-Kennfeld gespeichert werden und für das Einstellen einer Bremsdruck-Änderung bereitgestellt werden.

Somit ergibt sich in vorteilhafter Weise für dieses Verfahren zur Bestimmung einer Bremsdruck-Änderung ein einfach durchzuführendes Verfahren der Parametersuche für die Anpassung eines Anti Lock Controllers.

Dabei ist das Verfahren zur Bestimmung einer Bremsdruck-Änderung so einfach ausgelegt, dass ein Applikationsingenieur, beispielsweise durch Veränderung der Werte in einem Bremsdruck-Kennfeld, manuell Änderungen des Regelverfahrens vornehmen kann.

Ein aktueller Rad-Status kann auch durch weitere Statusparameter, wie sie weiter unten gelistet sind, charakterisiert werden.

Die Richtung der Änderung der Bremsdruck-Änderung, d. h. also, ob der Bremsdruck aufgrund der Bremsdruck-Änderung erhöht oder vermindert werden soll, kann beispielsweise durch ein Mode Decision Modul, so bestimmt werden, dass ein Rad-Status, der einem Ziel-Rad-Status entspricht, möglichst schnell erreicht bzw. aufrechterhalten wird.

Dabei kann ein solcher Ziel-Rad-Status für jede Achse des Fahrzeugs festgelegt werden und dieser Ziel-Rad-Status kann abhängig von Statusparametern, wie beispielsweise einem minimalen und einem maximalen Schlupf und/oder einer minimalen oder maximalen Radbeschleunigung, so festgelegt werden, dass eine Performance des gesamten Bremssystems optimiert wird.

Ein solcher Ziel-Rad-Status kann auch dynamisch je nach Fahrzustand, Kurvenradius, oder Untergrund etc. festgelegt werden.

Für die Bestimmung dieser Änderungsrichtung kann beispielsweise einer der Statusparameter aus der Mehrzahl der Statusparameter ausgewählt werden. Eine solche Auswahl kann anhand vorher bestimmter Regeln erfolgen. Beispielsweise kann dazu der Schlupf des betreffenden Rades herangezogen werden.

Typischerweise wird bei einer Zunahme des Bremsdrucks der Schlupf des Rades erhöht und das Rad weiter abgebremst, d. h. es erfolgt eine negative Beschleunigung für das Rad.

Eine Abnahme des Bremsdrucks ergibt typischerweise eine Verminderung des Schlupfs und eine geringere Bremsung des Rades, d. h. also eine Beschleunigung des Rades.

Für dieses Verfahren können beispielsweise vier Kennfelder generiert werden, die sich durch die relative Änderung der beiden Statusparameter, wie Schlupf und Radbeschleunigung unterscheiden, d. h. eine Zunahme oder eine Abnahme, des Statusparameters unterscheiden. Dabei können bei einer positiven Bremsdruck-Änderung, d. h. also einer resultierenden Zunahme des Bremsdrucks, die beiden Kennfelder, die sich auf die Radbeschleunigung beziehen, verwendet werden. Bei einer negativen Bremsdruck-Änderung können entsprechend die beiden Kennfelder verwendet werden die sich auf den Statusparameter Schlupf beziehen. Bevor das unten verwendete Verfahren des verstärkenden Lernens verwendet wird, können die entsprechenden Kennfelder mit Werten aus einer Simulation berechnet werden.

Die jeweiligen Kennfelder können eine Bremsdruck-Änderung entsprechend den jeweiligen Statusparametern direkt zuordnen oder einen Faktor angeben, um die Bremsdruck-Änderung mittels einer Rechnung zu bestimmen. Dabei kann der jeweilige Faktor bei einer aktuellen Zunahme der jeweiligen Statusparameter mit diesem Faktor multipliziert werden und bei einer aktuellen Abnahme der jeweiligen Statusparameter durch diesen Faktor geteilt werden.

Für einen aktuell zunehmenden Schlupf, d. h. wenn ein vorheriger Schlupf kleiner ist als der aktuelle Schlupf, ergibt sich also:

$$dp_{Target} = - K_{SlZu} * Schlupfwert$$

und für einen aktuell abnehmenden Schlupf:

$$dp_{Target} = - K_{SlAb} / Schlupfwert$$

Entsprechend gilt für eine aktuell zunehmende Radbeschleunigung:

$$dp_{Target} = K_{aZu} * Radbeschleunigung$$

und für eine aktuell abnehmende Radbeschleunigung entsprechend:

$$dp_{Target} = K_{aAb} / Radbeschleunigung$$

Dabei stehen die Parameter $K_{SlZu}$ bzw. $K_{SlAb}$ für eine Zunahme bzw. Abnahme des Schlupfwertes und $K_{aZu}$ bzw. $K_{aAb}$ für eine Zunahme bzw. Abnahme der Radbeschleunigung für die jeweilige Bremsdruck-Änderung $dp_{Target}$.

Durch diese Bestimmung der jeweiligen Bremsdruck-Änderung abhängig von der aktuellen Veränderung der Statusparameter erfolgt also eine unterschiedlich aggressive Regelung abhängig von der jeweiligen Richtung der Veränderung der Statusparameter.

Das bedeutet, dass für einen abnehmenden Wert eines Schlupfs oder einer Radbeschleunigung keine proportionale Regelung erfolgt. Dagegen erfolgt bei zunehmenden Werten des Schlupfs oder der Ratbeschleunigung eine proportionale Regelung.

Vorteilhafterweise kann das Verfahren für Fahrzeuge verwendet werden, die mit einem Anti Lock Control ausgestattet sind. Das Verfahren kann für alle Funktionen, die Radregler verwenden, wie z.B. bei der Traktionskontrolle (engl. Traction control) eingesetzt werden. Dabei kann der Ziel-Rad-Status entsprechend angepasst werden, damit die veränderte Aufgabe, das Rad ggf. schneller als eine Fahrzeugreferenzgeschwindigkeit zu machen, realisiert werden kann.

Gemäß einem Aspekt wird vorgeschlagen, dass zumindest ein vorheriger Rad-Status bereitgestellt wird und das Bremsdruck-Kennfeld spezifisch für die bestimmte Änderungsrichtung der Bremsdruck-Änderung und eine Änderung des zumindest einen Statusparameter ist.

Gemäß einem Aspekt wird vorgeschlagen, dass zumindest ein vorheriger Rad-Status bereitgestellt wird und das zumindest eine bereitgestellte Bremsdruck-Kennfeld abhängig von einer Änderungsrichtung des zumindest einen Statusparameters ist, dessen Wert von einem Ziel-Rad-Status abweicht.

Ein solcher Ziel-Rad-Status kann mit maximalen und minimalen Werten für die jeweiligen Statusparameter und für jede Achse, d. h. Vorderachse und Hinterachse des Fahrzeugs, entsprechend einem möglichst performanten Bremssystem festgelegt werden. Beispielsweise kann ein solcher Ziel-Rad-Status durch die folgenden Wertebereiche der Statusparameter Schlupf und Radbeschleunigung definiert sein: Schlupf_min = 5%; Schlupf_max = 10 %; Radbeschleunigung_min = -20 m/s2; Radbeschleunigung_max = -15 m/s2.

Wenn eine Ziel-Rad-Status dynamisch gewählt wird, kann dadurch eine FahrzeugReferenzgeschwindigkeit bei Bedarf gestützt werden, indem dann ein Schlupf_max kleiner als null für eine Achse für eine bestimmte Zeit gewählt wird. D.h. das Rad soll versuchen, schneller als Fahrzeugreferenzgeschwindigkeit zu werden, um diese zu plausibilisieren und, wenn nötig, zu korrigieren.

Darüber hinaus kann es bei einem Fahren eines Fahrzeugs auf sandigem Untergrund gewünscht sein einen höheren Schlupf an der Vorderachse zu haben, woraus sich für den Ziel-Schlupf-Wert z.B. die folgenden Werte festgelegt werden können: Schlupf_min = 25%; und Schlupf_max = 35 %.

Gemäß einem Aspekt wird vorgeschlagen, dass ein Gradient des zumindest einen Statusparameters mit zumindest dem vorherigen und dem aktuellen Wert des Statusparameters bestimmt wird; und die Bestimmung der Änderungsrichtung der Bremsdruck-Änderung zusätzlich mittels des Gradienten bestimmt wird. Vorteilhafterweise ermöglicht es der bestimmte Gradient eine jeweilige Bremsdruck-Änderung so zu bestimmen, dass möglichst rechtzeitig vorausschauend eine Bremsdruck eingestellt wird, um den Rad-Status möglichst schnell in den Ziel-Rad-Status zu bringen und dort zu halten.

Dabei können auch weitere vorherige Statusparameter für die Bestimmung des Gradienten verwendet werden, d. h. es kann eine zeitliche Abfolge von zumindest einem Statusparameter für die Bestimmung des Gradienten verwendet werden und/oder es können mehrere Statusparameter, wie unten gelistet, für die Bestimmung des Gradienten verwendet werden.

Diese Bestimmung des Gradienten ermöglicht für die Bestimmung der Richtung der Bremsdruck-Änderung eine Totzeit zu berücksichtigen, die es erforderlich macht, vorausschauend die Bremsdruck-Änderungen zu bestimmen, da ein Einfluss der Bremsdruck-Änderung, aufgrund der Totzeit von beispielsweise 30ms und einer Bestimmung des Rad-Status in einem Intervall von beispielsweise 5 ms, sich erst später auswirkt.

Gemäß einem Aspekt wird vorgeschlagen, dass die Bestimmung der Änderungsrichtung der Bremsdruck-Änderung mittels einer Vielzahl von Statusparametern bestimmt wird.

Beispiele für solche Statusparameter sind Rad-Schlupf und/oder Beschleunigung des Rades und/oder Gradient des Schlupfs und/oder Beschleunigung des Rades (aRad) und/oder Ruck des Rades (Jerk (Rad)) und/oder Radbeschleunigung relativ zur Beschleunigung des Fahrzeugs (aRad relativ zu aFahrzeug).

Gemäß einem Aspekt wird vorgeschlagen, dass die Bestimmung der Änderungsrichtung der Bremsdruck-Änderung abhängig von einer Totzeit eines Gesamtsystems für eine Änderung des Bremsdrucks bestimmt wird.

Gemäß einem Aspekt wird vorgeschlagen, dass der zumindest eine Statusparameter aus der Vielzahl der Statusparameter entsprechend einer Priorisierungsreihenfolge bestimmt wird.

Beispielsweise kann der Wert des Statusparameters Schlupf eine höhere Priorität für die Festlegung des bestimmten Statusparameters, der von einem Ziel-Rad-Status abweicht, haben, da ein Blockieren des Rades vermieden werden soll und dafür der Bremsdruck so weit vermindert werden kann, bis das jeweilige Rad einen Schlupf hat, der kleiner ist als mit dem Ziel-Rad-Status angestrebt ist.

Gemäß einem Aspekt wird vorgeschlagen, dass die Mehrzahl der Statusparameter einen Radschlupf und/oder eine Beschleunigung des Rades und/oder ein Gradient des Schlupfs und/oder eine Beschleunigung des Rades und/oder Ruck des Rades und/oder eine Radbeschleunigung relativ zur Beschleunigung des Fahrzeugs aufweist.

Erfindungsgemäß wird ein Verfahren zur Bestimmung eines Bremsdruck-Kennfeldes für das oben beschriebene Verfahren vorgeschlagen, das die folgenden Schritte aufweist:
In einem Schritt wird ein aktueller Rad-Status bereitgestellt, wobei der Rad-Status eine Mehrzahl von Statusparametern aufweist. In einem weiteren Schritt werden Belohnungs-Regeln für ein verstärkendes Lern-Verfahren (engl.: Reinforcement Learning) bereitgestellt. In einem weiteren Schritt wird eine Belohnung mittels der Belohnungs-Regeln und dem aktuellen Rad-Status bestimmt, und sofern eine Belohnung für das verstärkende Lern-Verfahren bestimmt wurde, wird sowohl eine zuletzt erfolgte Druckänderung in Bezug auf Wert und Änderungsrichtung und dem zugeordneten Bremsdruck-Kennfeld bestimmt, als auch ein Korrekturwert für das zugeordnete Bremsdruck-Kennfeld entsprechend dem bestärkenden Lern-Verfahren bestimmt.

Eine solche Belohnungs-Regel gibt an, welche Aktion, wie beispielsweise die Bremsdruck-Änderung, bei einer beliebigen Verhaltensvariante, bzw. Observation, wie die Abweichung des Rad-Status vom Ziel-Rad-Status, aus der Lernumgebung (Environment) ausgeführt werden soll, um die Belohnung (Reward) zu maximieren oder eine Bestrafung zu minimieren.

Ein Agent, der dieses verstärkende Lern-Verfahren implementiert, kann die mit den Bremsdruck-Kennfeldern definierte Druckänderung abhängig von den jeweiligen Statusparametern modifizieren, bis beispielsweise der Statusparameter Schlupf immer unter einer vordefinierten Schwelle liegt. Diese Modifikation kann durch eine festgelegte prozentuale Änderung oder zufällig erfolgen.

Vorteilhafterweise kann das Verfahren zur Bestimmung eines Bremsdruck-Kennfelds verwendet werden die Kennfelder so anzupassen, dass die optimale Performance mit einem so gesteuerten Bremssystem erreicht wird. Dabei werden die Belohnungs-Regeln so definiert, dass eine Ziel-Performance erreicht werden kann.

Wenn eine Belohnung gemäß den Belohnungs-Regeln bestimmt wird, die auch entsprechende Bestrafungsregeln beinhalten kann, wird die Bremsdruck-Änderung oder der entsprechende Parameter, die in einem gewissen Rad-Zustand erfolgt ist, aus dem die Belohnung bzw. Bestrafung folgt, modifiziert.

Ein Agent des verstärkenden Lern-Verfahrens modifiziert den Parameter bzw. die Bremsdruck-Änderung mittels zufälliger oder prozentualer Veränderung bis der Wert der Bremsdruck-Änderung aus dem entsprechenden Bremsdruck-Kennfeld bei dem jeweiligen Rad-Status keine weitere Belohnung bestimmen lässt. Dies bedeutet dass der Rad-Status dann innerhalb des Ziel-Rad-Status liegen kann. Beispielsweise kann dann ein Statusparameter: Schlupf immer innerhalb eines maximalen und eines minimalen Wertes liegen.

Weiterhin beispielsweise können Druck-Änderungen in einem gewissen Rad-Status die zu einem hohen Gradienten des Schlupfs führen mit den Belohnungs-Regeln bestraft werden.

Vorteilhafterweise übernimmt bei diesem Verfahren dieser Agent, der das verstärkende Lern-Verfahren implementiert, die Optimierung des Regelverfahrens, in dem er die jeweiligen Bremsdruck-Kennfelder anpasst und der Applikationsingenieur die Umgebung, d. h. unterschiedliche Rad-Status durch ein entsprechendes Fahrverhalten vorgibt. Dadurch ergibt sich die angestrebte Vereinfachung der Anpassung eines Brems-Regelsystems an das jeweilige Fahrzeug.

Gemäß einem Aspekt wird vorgeschlagen, dass bei dem Verfahren zur Bestimmung eines Bremsdruck-Kennfeldes zumindest ein vorheriger Radstatus des Rades bereitgestellt wird und die Belohnung mit dem aktuellen und/oder dem zumindest einen vorherigen Radstatus bestimmt wird.

Gemäß einem Aspekt wird vorgeschlagen, dass die Belohnungs-Regeln eine Belohnung abhängig von einem Unterschreiten eines Grenzwerts für den Schlupf und/oder einem Unterschreiten eines Wertes des Schlupfs unter Null und/oder einer Modulationshäufigkeit einer Druckänderung bestimmen.

Es wird eine Verwendung des oben beschriebenen Verfahrens zur Bestimmung einer Bremsdruck-Änderung zur Regelung eines Bremsdrucks an einem Rad vorgeschlagen.

Es wird eine Verwendung des Verfahrens zur Bestimmung eines Bremsdruck-Kennfeldes zur Optimierung der Performance einer Bremsdruckregelung für ein Rad eines Fahrzeugs vorgeschlagen.

Es wird ein Verfahren vorgeschlagen, bei dem, basierend auf einer bestimmten Bremsdruck-Änderung, ein Steuersignal zur Ansteuerung eines zumindest teilautomatisierten Fahrzeugs bereitgestellt wird; und/oder basierend auf der bestimmten Bremsdruck-Änderung, ein Warnsignal zur Warnung eines Fahrzeuginsassen bereitgestellt wird.

Damit kann beispielsweise ein Steuergerät des Fahrzeugs eine Antriebs-SchlupfRegelung (TCS: traction contol system) realisieren, bei dem beispielsweise ein Rad, das temporär einen vereisten Untergrund hat, gebremst wird oder bei einem Bremsvorgang alle Räder so gebremst werden, dass eine Bremsweg unter gegebenen Umständen minimal wird.

Der Begriff "basierend auf" ist in Bezug auf das Merkmal, dass ein Steuersignal basierend auf einer bestimmten Bremsdruck-Änderung bereitgestellt wird, breit zu verstehen. Es ist so zu verstehen, dass die bestimmte Bremsdruck-Änderung für jedwede Bestimmung oder Berechnung eines Steuersignals herangezogen wird, wobei das nicht ausschließt, dass auch noch andere Eingangsgrößen für diese Bestimmung des Steuersignals herangezogen werden. Entsprechendes gilt entsprechend für die Bereitstellung des Warnsignals.

Es wird ein Brems-System vorgeschlagen, dass eingerichtet ist, eines der oben beschriebenen Verfahren zur Bestimmung einer Bremsdruck-Änderung durchzuführen. Mit einer solchen Vorrichtung kann das entsprechende Verfahren leicht in unterschiedliche Systeme integriert werden.

Gemäß einem weiteren Aspekt wird ein Computerprogramm angegeben, das Befehle umfasst, die bei der Ausführung des Computerprogramms durch einen Computer diesen veranlassen, eines der oben beschriebenen Verfahren auszuführen. Ein solches Computerprogramm ermöglicht den Einsatz des beschriebenen Verfahrens in unterschiedlichen Systemen.

Es wird ein maschinenlesbares Speichermedium vorgeschlagen, auf dem das oben beschriebene Computerprogramm gespeichert ist.

Unter dem hier verwendeten Begriff Fahrzeug kann auch allgemein eine mobile Plattform verstanden werden, die ein zumindest teilweise automatisiertes System sein kann, das mobil ist, und/oder ein Fahrerassistenzsystem. Ein Beispiel kann ein zumindest teilweise automatisiertes Fahrzeug bzw. ein Fahrzeug mit einem Fahrerassistenzsystem sein. Das heißt, in diesem Zusammenhang beinhaltet ein zumindest teilweise automatisiertes System eine mobile Plattform in Bezug auf eine zumindest teilweise automatisierte Funktionalität, aber eine mobile Plattform beinhaltet auch Fahrzeuge und andere mobile Maschinen einschließlich Fahrerassistenzsysteme. Weitere Beispiele für mobile Plattformen können Fahrerassistenzsysteme mit mehreren Sensoren, mobile Multisensor-Roboter wie z.B. Roboterstaubsauger oder Rasenmäher, ein Multisensor-Überwachungssystem, ein Schiff, ein Flugzeug, eine Fertigungsmaschine, ein persönlicher Assistent oder ein Zugangskontrollsystem sein. Jedes dieser Systeme kann ein vollständig oder teilweise autonomes System sein.

Ausführungsbeispiele

Ausführungsbeispiele der Erfindung werden mit Bezug auf die Figuren 1 bis 9 dargestellt und im Folgenden näher erläutert. Es zeigt:

| | |
|---|---|
| Figur 1 | einen Verlauf eines Schlupfwerts und der entsprechenden Radgeschwindigkeit über der Zeit; |
| Figur 2 | ein Brems-System; |
| Figur 3 | ein Status-Diagramm mit einer Abfolge von Status-Werten; |
| Figur 4 | ein Diagramm mit Statusparametern; |
| Figur 5 | ein Kennfeld mit einer Matrix für die Änderung der Werte des Kennfeldes; |
| Figur 6 | eine Darstellung von geänderten Kennfeld-Werten; |
| Figur 7 | ein Diagramm mit einem Statusparameter über der Zeit dargestellt; |
| Figur 8 | ein Kennfeld mit einer Liste für die Änderung der Werte des Kennfelds; und |
| Figur 9 | ein Diagramm mit einer Vielzahl von Statusparametern über der Zeit. |

Die Figur 1 zeigt beispielhaft in einem Diagramm 100 einen zeitlichen Verlauf eines Schlupfwerts 120 und Grenzen $S_{max}$, $S_{min}$ innerhalb denen der Schlupfwert S liegen sollte. Dabei zeigt die Kurve 160 eine Referenzgeschwindigkeit v und die Kurve 140 die Geschwindigkeit des betrachteten Rades.

Die Figur 2 zeigt ein Brems-System 200, das eingerichtet ist, das Verfahren zum Bestimmen der Bremsdruck-Änderung zur Optimierung eines Bremsvorgangs durchzuführen.

Mittels Rad-Sensoren und anderen Fahrzeugsensoren wird ein aktueller Rad-Status 210 des Rades bereitgestellt, wobei der Rad-Status 210 eine Mehrzahl von Statusparametern, wie beispielsweise Schlupf s und Rad-Beschleunigung a aufweist. In dem Modul 220 des Brems-Systems 200 wird zumindest ein Statusparameter bestimmt, dessen Wert von einem Ziel-Rad-Status abweicht und eine Änderungsrichtung der Bremsdruck-Änderung wird abhängig von einer Abweichung des zumindest einen Statusparameters von dem Ziel-Rad-Status bestimmt. Alternativ kann der Bremsdruck auch konstant gehalten werden. Mit dieser bestimmten Änderungsrichtung p↓ oder p↑ wird ein bereitgestelltes Bremsdruck-Kennfeld 250a, 250b, 251a, 251b zur Bestimmung eines Werts der Bremsdruck-Änderung ausgewählt, wobei das Bremsdruck-Kennfeld eine Bremsdruck-Änderung der Mehrzahl der Statusparameter Schlupf s, bzw. Radbeschleunigung a repektive D für das Bremsen zuordnet und spezifisch für die bestimmte Änderungsrichtung der Bremsdruck-Änderung und Statusparameter-Änderung ist. D. h. es werden die Bremsdruck-Kennfelder abhängig von der Richtung der Veränderung der Statusparameter ausgesucht. Es gibt also ein Bremsdruck-Kennfeld 250b, das spezifisch für eine Zunahme der Radbeschleunigung und ein Bremsdruck-Kennfeld 250a, das spezifisch für eine Abnahme der Radbeschleunigung ist. Entsprechend gilt für den Statusparameter Schlupf für eine Zunahme des Schlupfs ein Bremsdruck-Kennfeld 251a und eine Abnahme des Schlupfs ein Bremsdruck-Kennfeld 251b. Dabei sind die Bremsdruck-Kennfelder 250a, 250b der positiven Bremsdruck-Änderung zugeordnet und die Bremsdruck-Kennfelder 251a, 251b der negativen Bremsdruck-Änderung zugeordnet. Damit kann der Wert der Bremsdruck-Änderung Dp mit dem aktuellen Rad-Status und dem entsprechenden bereitgestellten Bremsdruck-Kennfeld bestimmt werden und insbesondere an das Bremssystem für das Rad weitergegeben werden. An das Modul 240 werden die Werte der Statusparameter und der Druckänderungen weitergegeben, sodass mit dem oben beschriebenen verstärkenden Lern-Verfahren die entsprechenden Bremsdruck-Kennfelder modifiziert werden können.

Die Figur 3 zeigt schematisch ein Diagramm 300 mit einer Vielzahl von Kombinationen von zwei Statusparametern Schlupf s und Radbeschleunigung a und skizziert eine Abfolge von Status-Werten. Dabei ist der Ziel-Rad-Status 310 für die Status-Felder mit einer dicken Umrahmung gekennzeichnet. Wenn das Verfahren mit einem in diesem Diagramm 300 oben rechts angeordneten Rad-Status beginnt, kann über die doppelt schraffierten Feldern 314 eine Abfolge von Status-Feldern gekennzeichnet sein, in denen jeweils in einem festgelegten Zeitintervall von beispielsweise 5 ms der jeweilige Status bestimmt wird und in diesem Fall insbesondere aufgrund einer Totzeit von beispielsweise 30 ms eine positive Bremsdruck-Änderung erfolgt, ohne dass der Ziel-Rad-Status 310 direkt erreicht wird. Die schwarz gekennzeichneten Felder 310 kennzeichnen Status-Felder in denen eine negative Bremsdruck-Änderung erfolgt.

Bremsdruck-Änderungen beeinflusst die Änderung des Rad-Status in dem Diagramm 300 folgendermaßen:

| | Schlupf (X-Achse) | aRad (Y-Achse) |
|---|---|---|
| Druck Aufbau | größer | kleiner |
| Druck Abbau | kleiner | größer |

Die Figur 4 zeigt schematisch ein Diagramm 400 mit einer zeitliche Abfolge von Schlupfwerten s 430, die beispielsweise im Bereich 440 außerhalb eines oberen und unteren Grenzwerts liegen. Dabei zeigt die Kurve 420 den zugehörigen Statuswert S an und die Kurve 410 zeigt einen Verlauf des resultierenden Bremsdrucks p entsprechend den kumulierten Bremsdruck-Änderungen an und skizziert einen Bereich 450, dessen dem Zeitbereich des Bereichs 440 vorhergehenden Bremsdruck-Änderungen ursächlich für das Überschreiten des Schlupfwerts 430 im Bereich 450 angenommen werden können. Somit kann mit dem verstärkenden Lernen das entsprechende Bremsdruck-Kennfeld für den Status 420 angepasst werden, um eine Regelung zu erreichen, bei der der Schlupf innerhalb festgelegter Grenzen bleibt.

Die Figur 5 skizziert ein Kennfeld 520 für eine zunehmende Druckänderung bei dem der Statusparameter für eine Beschleunigung des Rades abnimmt, bzw. eine Bremsung zunimmt.

Die Figur 6 zeigt eine Darstellung von geänderten Kennfeld-Werten, die abhängig von den Statusparametern: Radbeschleunigung a und Schlupf s angeben wie abhängig von den Statusparametern der Bremsdruck p geändert werden soll.

Die Figur 7 zeigt ein Diagramm 700 mit dem Statusparameter Schlupf s 720 über der Zeit dargestellt und es ist zu erkennen, dass in dem Bereich 725 der Schlupf s unter einem festgelegten minimalen Schlupfwert liegt. Zusätzlich ist in diesem Diagramm 700 der zeitliche Verlauf 715 des Bremsdrucks p eingezeichnet. Das verstärkende Lern-Verfahren kann diese zuletzt erfolgte Bremsdruck-Änderung identifizieren und das zugehörige Bremsdruck-Kennfeld entsprechend modifizieren, um die Unterschreitung des Schlupfs für den entsprechenden Rad-Status zukünftig zu vermeiden.

Die Figur 8 zeigt ein Kennfeld, dass einer positiven Bremsdruck-Änderung bei einer abnehmenden Radbeschleunigung bzw. steigenden Bremsung zugeordnet ist und mittels einer Liste für die Änderung der Werte des Kennfelds abhängig vom Rad-Status aktualisiert wird, wobei die Liste mit dem verstärkenden Lern-Verfahren bestimmt wurde.

Die Figur 9 zeigt ein Diagramm mit einer Vielzahl von Parametern und Statusparameter über der Zeit: Schlupf 946, schnelle Druckzunahme 944, langsame Druckzunahme 945, konstant gehaltener Druck 943, schnelle Druckabnahme 941, langsame Druckabnahme 942, Status-Index 947, Ziel-Brems-Druck 948. In dem Bereich 930, der eine schnelle Abfolge von Änderungen des Schlupfs kennzeichnet, kann diese Veränderung auf vorhergehende Ziel-Brems-Druckänderungen in der Kurve 948 mit dem im Bereich 920 gekennzeichneten Rad-Status zurückgeführt werden. Da eine hohe Frequenz von Änderungen des Schlupfs vermieden werden soll kann eine Modulationshäufigkeit der Druckänderung in die Belohnungs-Regeln des verstärkenden Lern-Verfahrens integriert werden.

## Patentansprüche

1. Verfahren zur Bestimmung einer Bremsdruck-Änderung für ein Rad eines Fahrzeugs zur Optimierung eines Bremsvorgangs, mit den Schritten:

    Bereitstellen eines aktuellen Rad-Status (210) des Rades, wobei der Rad-Status (210) eine Mehrzahl von Statusparametern aufweist;
    Bestimmen zumindest eines Statusparameters, dessen Wert von einem Ziel-Rad-Status (310) abweicht;
    Bestimmen einer Änderungsrichtung der Bremsdruck-Änderung abhängig von einer Abweichung des zumindest einen Statusparameters von dem Ziel-Rad-Status;
    Bereitstellen eines Bremsdruck-Kennfelds (250a, 250b, 251a, 251b) zur Bestimmung eines Wertes der Bremsdruck-Änderung, wobei das Bremsdruck-Kennfeld (250a, 250b, 251a, 251b) eine Bremsdruck-Änderung der Mehrzahl der Statusparameter zuordnet und spezifisch für die bestimmte Änderungsrichtung der Bremsdruck-Änderung ist;
    Bestimmen eines Wertes der Bremsdruck-Änderung mit dem aktuellen Rad-Status (210) und dem bereitgestellten Bremsdruck-Kennfeld (250a, 250b, 251a, 251b);

    **dadurch gekennzeichnet,**
    **dass** das Bremsdruck-Kennfeld (250a, 250b, 251a, 251b) mit den folgenden Schritten bestimmt wird:

    Bereitstellen eines aktuellen Rad-Status (210), wobei der Rad-Status (210) eine Mehrzahl von Statusparametern aufweist;
    Bereitstellen von Belohnungs-Regeln für ein verstärkendes Lern-Verfahren;
    Bestimmen einer Belohnung mittels der Belohnungs-Regeln und dem aktuellen Rad-Status (210); und sofern eine Belohnung für das verstärkende Lern-Verfahren bestimmt wurde:

        Bestimmen einer zuletzt erfolgten Bremsdruck-Änderung in Bezug auf Wert und Änderungsrichtung und dem zugeordneten Bremsdruck-Kennfeld (250a, 250b, 251a, 251b);
        Bestimmen eines Korrekturwerts für das zugeordnete Bremsdruck-Kennfeld (250a, 250b, 251a, 251b) entsprechend dem bestärkenden Lern-Verfahren.

2. Verfahren gemäß Anspruch 1, wobei zumindest ein vorheriger Rad-Status bereitgestellt wird und das zumindest eine bereitgestellte Bremsdruck-Kennfeld (250a, 250b, 251a, 251b) abhängig von einer Änderungsrichtung des zumindest einen Statusparameters ist, dessen Wert von einem Ziel-Rad-Status (310) abweicht.

3. Verfahren gemäß Anspruch 2, wobei ein Gradient des zumindest einen Statusparameters mit zumindest dem vorherigen und dem aktuellen Wert des Statusparameters bestimmt wird; und die Bestimmung der Änderungsrichtung der Bremsdruck-Änderung zusätzlich mittels des Gradienten bestimmt wird.

4. Verfahren gemäß einem der vorhergehenden Ansprüche, wobei die Bestimmung der Änderungsrichtung der Bremsdruck-Änderung mittels einer Vielzahl von Statusparametern bestimmt wird.

5. Verfahren gemäß einem der vorhergehenden Ansprüche, wobei die Bestimmung der Änderungsrichtung der Bremsdruck-Änderung abhängig von einer Totzeit eines Gesamtsystems für eine Änderung des Bremsdrucks bestimmt wird.

6. Verfahren gemäß einem der vorhergehenden Ansprüche, wobei der zumindest eine Statusparameter aus der Vielzahl der Statusparameter entsprechend einer Priorisierungsreihenfolge bestimmt wird.

7. Verfahren gemäß einem der vorhergehenden Ansprüche, wobei die Mehrzahl der Statusparameter einen Radschlupf und/oder eine Beschleunigung des Rades und/oder ein Gradient des Schlupfs und/oder eine Beschleunigung des Rades und/oder Ruck des Rades und/oder eine Radbeschleunigung relativ zur Beschleunigung des Fahrzeugs aufweist.

8. Verfahren gemäß einem der Ansprüche 1 bis 7, wobei die Belohnungs-Regeln eine Belohnung abhängig von einem Unterschreiten eines Grenzwertes für den Schlupf und/oder einem Unterschreiten eines Wertes des Schlupfs unter Null und/oder einer Modulationshäufigkeit einer Druckänderung bestimmen.

9. Verwendung des Verfahrens gemäß einem der Ansprüche 1 bis 7 zur Regelung eines Bremsdrucks an einem Rad und/oder gemäß einem der Ansprüche 1 bis 8 zur Optimierung der Performance einer Bremsdruckregelung für ein Rad eines Fahrzeugs.

10. Verfahren, bei dem, basierend auf einer bestimmten Bremsdruck-Änderung gemäß einem der Ansprüche 1 bis 8, ein Steuersignal zur Ansteuerung eines zumindest teilautomatisierten Fahrzeugs bereitgestellt wird; und/oder basierend auf der bestimmten Bremsdruck-Änderung, ein Warnsignal zur Warnung eines Fahrzeuginsassen bereitgestellt wird.

11. Computerprogramm, umfassend Befehle, die bei der Ausführung des Computerprogramms durch einen Computer diesen veranlassen, das Verfahren nach einem der Ansprüche 1 bis 8 auszuführen.

12. Maschinenlesbares Speichermedium, auf dem das Computerprogramm nach Anspruch 11 gespeichert ist.

## Claims

1. Method for determining a change in brake pressure for a wheel of a vehicle to optimize a braking operation, comprising the steps of:

providing a current wheel status (210) of the wheel, the wheel status (210) having a plurality of status parameters;
determining at least one status parameter whose value deviates from a target wheel status (310);
determining a direction of change of the change in brake pressure according to a deviation of the at least one status parameter from the target wheel status;
providing a brake pressure characteristic map (250a, 250b, 251a, 251b) to determine a value of the change in brake pressure, the brake pressure characteristic map (250a, 250b, 251a, 251b) associating a change in brake pressure with the plurality of status parameters and being specific to the determined direction of change of the change in brake pressure;
determining a value of the change in brake pressure using the current wheel status (210) and the provided brake pressure characteristic map (250a, 250b, 251a, 251b);
**characterized**
**in that** the brake pressure characteristic map (250a, 250b, 251a, 251b) is determined using the following steps:

providing a current wheel status (210), the wheel status (210) having a plurality of status parameters;
providing reward rules for a reinforcement learning process;
determining a reward by means of the reward rules and the current wheel status (210); and if a reward has been determined for the reinforcement learning process:
determining a recent change in brake pressure in terms of value and direction of change and the associated brake pressure characteristic map (250a, 250b, 251a, 251b);
determining a correction value for the associated brake pressure characteristic map (250a, 250b, 251a, 251b) in accordance with the reinforcement learning process.

2. Method according to Claim 1, wherein at least one previous wheel status is provided and the at least one provided brake pressure characteristic map (250a, 250b, 251a, 251b) is dependent on a direction of change of the at least one status parameter whose value deviates from a target wheel status (310).

3. Method according to Claim 2, wherein a gradient of the at least one status parameter is determined using at least the previous and the current value of the status parameter; and the determination of the direction of change of the change in brake pressure is additionally determined by means of the gradient.

**4.** Method according to one of the preceding claims, wherein the determination of the direction of change of the change in brake pressure is determined by means of a multiplicity of status parameters.

**5.** Method according to one of the preceding claims, wherein the determination of the direction of change of the change in brake pressure is determined according to an idle time of an overall system for a change in the brake pressure.

**6.** Method according to one of the preceding claims, wherein the at least one status parameter is determined from the multiplicity of status parameters in accordance with an order of prioritization.

**7.** Method according to one of the preceding claims, wherein the plurality of status parameters comprise a wheel slippage and/or an acceleration of the wheel and/or a gradient of the slippage and/or an acceleration of the wheel and/or a jerk of the wheel and/or a wheel acceleration relative to the acceleration of the vehicle.

**8.** Method according to one of Claims 1 to 7, wherein the reward rules determine a reward according to a shortfall below a limit value for the slippage and/or a shortfall in a value of the slippage below zero and/or a modulation frequency of a pressure change.

**9.** Use of the method according to one of Claims 1 to 7 to control a brake pressure at a wheel and/or according to one of Claims 1 to 8 to optimize the performance of brake pressure control for a wheel of a vehicle.

**10.** Method in which, based on a determined change in brake pressure according to one of Claims 1 to 8, a control signal is provided to control an at least partially automated vehicle; and/or, based on the determined change in brake pressure, a warning signal is provided to warn a vehicle occupant.

**11.** Computer program, comprising commands that, when the computer program is executed by a computer, cause said computer to carry out the method according to one of Claims 1 to 8.

**12.** Machine-readable storage medium on which the computer program according to Claim 11 is stored.

## Revendications

**1.** Procédé pour déterminer une variation de pression de freinage sur une roue d'un véhicule afin d'optimiser un processus de freinage, comprenant les étapes suivantes :

fournir un état actuel (210) de la roue, l'état (210) de la roue comprenant plusieurs paramètres d'état ;
déterminer au moins un paramètre d'état, dont la valeur diffère d'un état de roue cible (310) ;
déterminer un sens de variation de la variation de pression de freinage en fonction d'un écart entre ledit au moins un paramètre d'état et l'état de roue cible ;
fournir une cartographie de pression de freinage (250a, 250b, 251a, 251b) pour déterminer une valeur de la variation de pression de freinage, la cartographie de pression de freinage (250a, 250b, 251a, 251b) attribuant une variation de pression de freinage à la pluralité de paramètres d'état et étant spécifique au sens de variation déterminé de la variation de pression de freinage ;
déterminer une valeur de la variation de pression de freinage au moyen de l'état actuel de la roue (210) et de la cartographie de pression de freinage fournie (250a, 250b, 251a, 251b) ;
**caractérisé en ce que**
la cartographie de pression de freinage (250a, 250b, 251a, 251b) est déterminée au moyen des étapes suivantes :
fournir un état actuel de la roue (210), l'état de la roue (210) comprenant plusieurs paramètres d'état ;
fournir des règles de récompense pour un processus d'apprentissage renforcé ;
déterminer une récompense au moyen des règles de récompense et de l'état actuel de la roue (210) ; et, si une récompense a été déterminée pour le processus d'apprentissage par renforcement :
déterminer la modification de la pression de freinage la plus récente en termes de valeur et de sens de modification et de la cartographie de pression de freinage associée (250a, 250b, 251a, 251b) ;
déterminer une valeur de correction pour la cartographie de pression de freinage associée (250a, 250b, 251a, 251b) conformément au processus d'apprentissage renforcé.

**2.** Procédé selon la revendication 1, dans lequel au moins un état de roue précédent est fourni et ladite au moins une cartographie de pression de freinage fournie (250a, 250b, 251a, 251b) dépend du sens de variation dudit au moins un paramètre d'état dont la valeur s'écarte d'un état de roue cible (310).

**3.** Procédé selon la revendication 2, dans lequel un gradient dudit au moins un paramètre d'état est déterminé en utilisant au moins la valeur précédente et la valeur actuelle du paramètre d'état ; et la détermination du sens de variation de la variation de pression de freinage est déterminée en outre au moyen du gradient.

**4.** Procédé selon l'une des revendications précédentes, dans lequel la détermination du sens de variation de la variation de pression de freinage est déterminée au moyen d'une pluralité de paramètres d'état.

**5.** Procédé selon l'une des revendications précédentes, dans lequel la détermination du sens de variation de la variation de pression de freinage est déterminée en fonction d'un temps mort d'un système global pour une variation de la pression de freinage.

**6.** Procédé selon l'une des revendications précédentes, dans lequel ledit au moins un paramètre d'état parmi la pluralité de paramètres d'état est déterminé selon un ordre de priorité.

**7.** Procédé selon l'une des revendications précédentes, dans lequel la pluralité de paramètres d'état comprend un patinage de roue et/ou une accélération de la roue et/ou un gradient du patinage et/ou une accélération de la roue et/ou un à-coup de la roue et/ou une accélération de la roue par rapport à l'accélération du véhicule.

**8.** Procédé selon l'une des revendications 1 à 7, dans lequel les règles de récompense déterminent une récompense en fonction d'un dépassement vers le bas d'une valeur limite pour le patinage et/ou d'un dépassement vers le bas d'une valeur du patinage en dessous de zéro et/ou d'une fréquence de modulation d'une variation de pression.

**9.** Utilisation du procédé selon l'une des revendications 1 à 7 pour réguler une pression de freinage sur une roue et/ou selon l'une des revendications 1 à 8 pour optimiser les performances d'une régulation de pression de freinage pour une roue d'un véhicule.

**10.** Procédé dans lequel, sur la base d'une variation de pression de freinage déterminée selon l'une des revendications 1 à 8, un signal de commande est fourni pour commander un véhicule au moins partiellement automatisé ; et/ou sur la base de la variation de pression de freinage déterminée, un signal d'avertissement est fourni pour avertir un occupant du véhicule.

**11.** Programme informatique comprenant des instructions qui, lors de l'exécution du programme informatique par un ordinateur, amènent celui-ci à mettre en œuvre le procédé selon l'une des revendications 1 à 8.

**12.** Support de stockage lisible par machine sur lequel est enregistré le programme informatique selon la revendication 11.

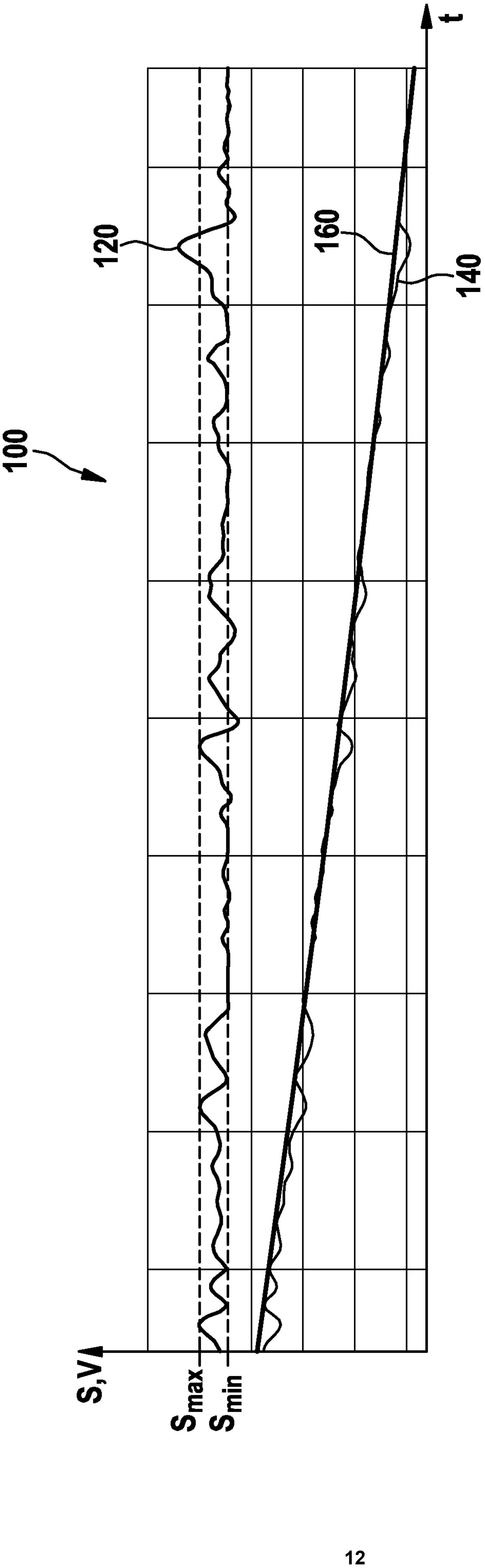


Fig. 1

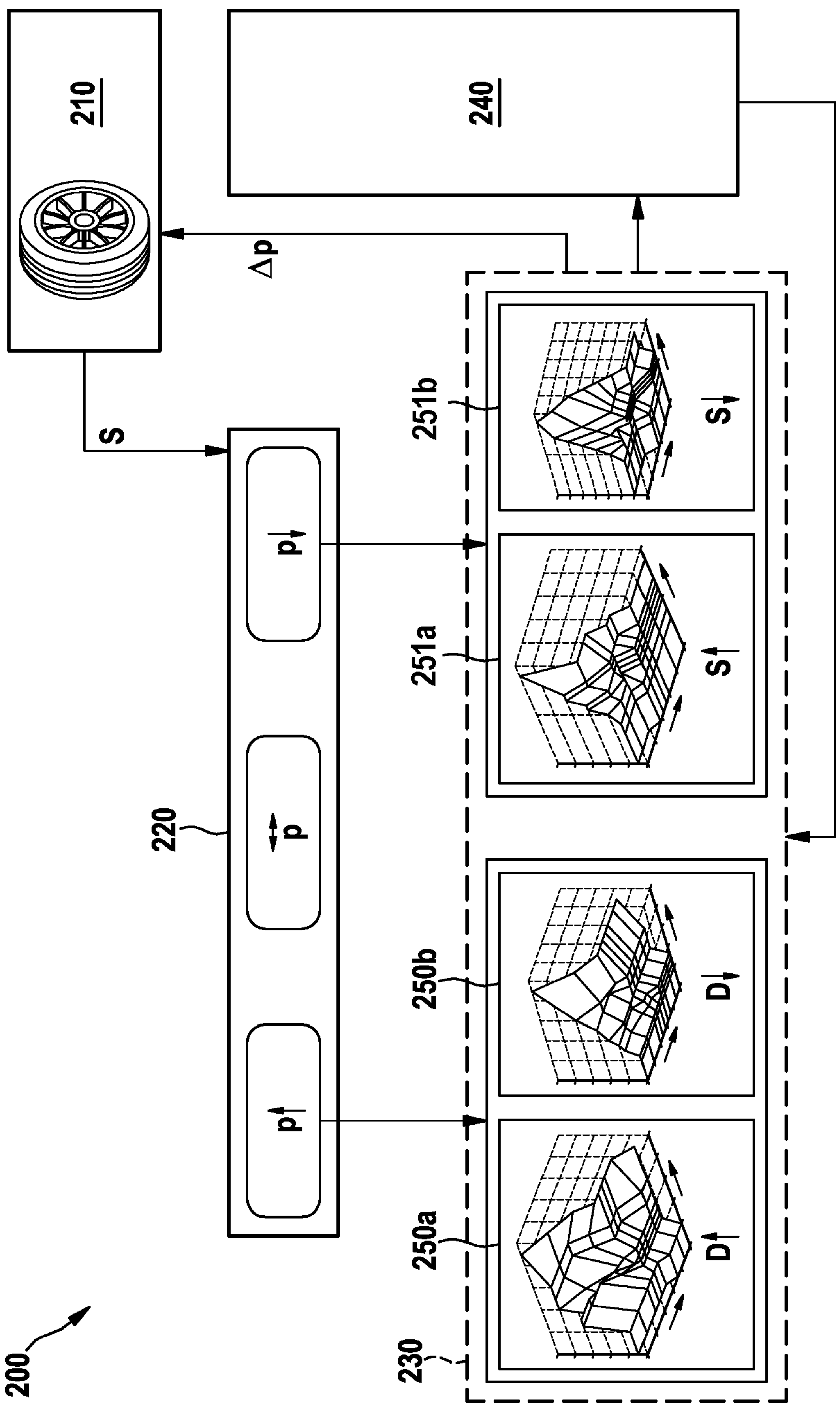


Fig. 2

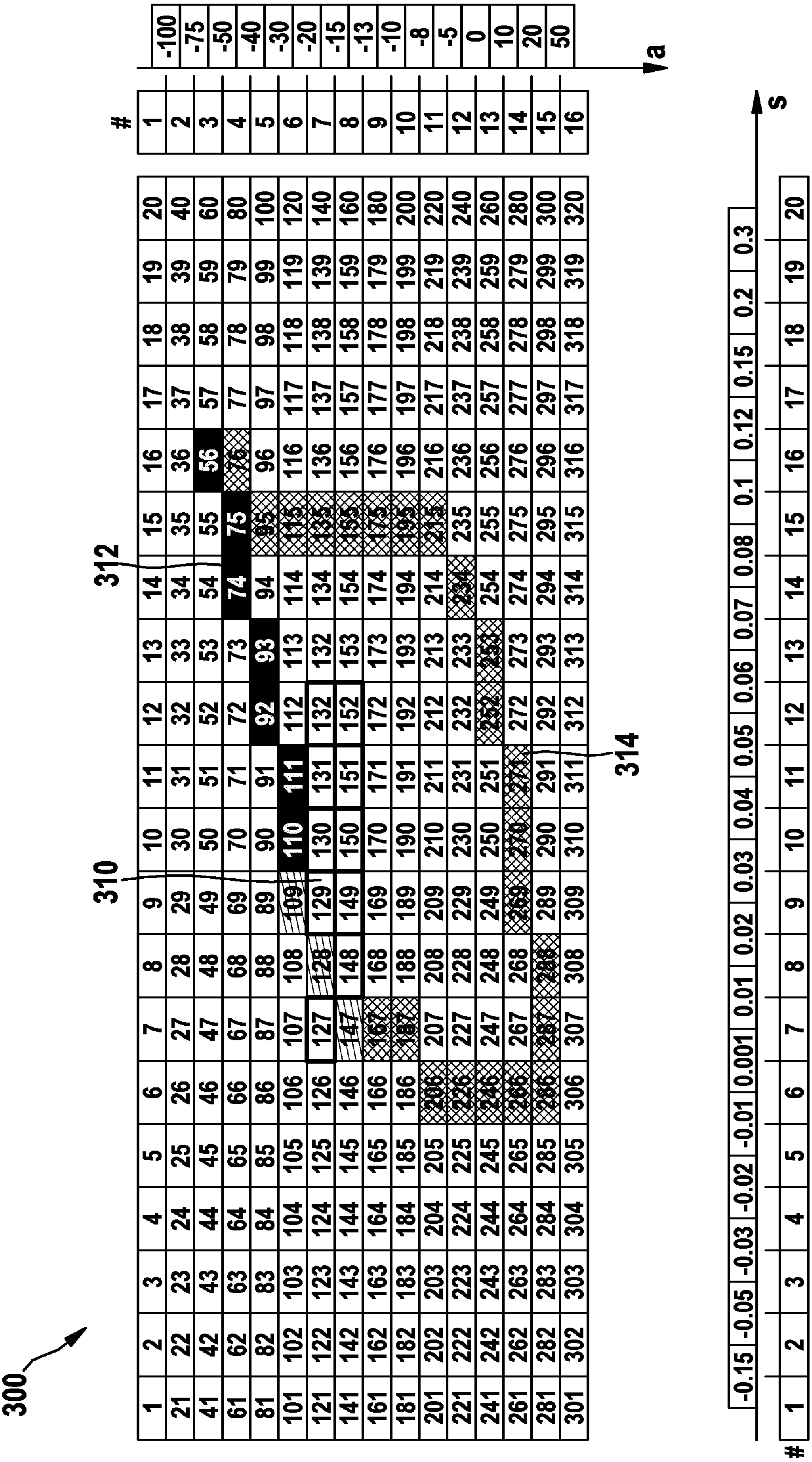


| # | | | | | | | | | | | | | | | | | | | | |
|---|---|---|---|---|---|---|---|---|---|---|---|---|---|---|---|---|---|---|---|---|
| 1 | 1 | 2 | 3 | 4 | 5 | 6 | 7 | 8 | 9 | 10 | 11 | 12 | 13 | 14 | 15 | 16 | 17 | 18 | 19 | 20 |
| 2 | 21 | 22 | 23 | 24 | 25 | 26 | 27 | 28 | 29 | 30 | 31 | 32 | 33 | 34 | 35 | 36 | 37 | 38 | 39 | 40 |
| 3 | 41 | 42 | 43 | 44 | 45 | 46 | 47 | 48 | 49 | 50 | 51 | 52 | 53 | 54 | 55 | 56 | 57 | 58 | 59 | 60 |
| 4 | 61 | 62 | 63 | 64 | 65 | 66 | 67 | 68 | 69 | 70 | 71 | 72 | 73 | 74 | 75 | 76 | 77 | 78 | 79 | 80 |
| 5 | 81 | 82 | 83 | 84 | 85 | 86 | 87 | 88 | 89 | 90 | 91 | 92 | 93 | 94 | 95 | 96 | 97 | 98 | 99 | 100 |
| 6 | 101 | 102 | 103 | 104 | 105 | 106 | 107 | 108 | 109 | 110 | 111 | 112 | 113 | 114 | 115 | 116 | 117 | 118 | 119 | 120 |
| 7 | 121 | 122 | 123 | 124 | 125 | 126 | 127 | 128 | 129 | 130 | 131 | 132 | 133 | 134 | 135 | 136 | 137 | 138 | 139 | 140 |
| 8 | 141 | 142 | 143 | 144 | 145 | 146 | 147 | 148 | 149 | 150 | 151 | 152 | 153 | 154 | 155 | 156 | 157 | 158 | 159 | 160 |
| 9 | 161 | 162 | 163 | 164 | 165 | 166 | 167 | 168 | 169 | 170 | 171 | 172 | 173 | 174 | 175 | 176 | 177 | 178 | 179 | 180 |
| 10 | 181 | 182 | 183 | 184 | 185 | 186 | 187 | 188 | 189 | 190 | 191 | 192 | 193 | 194 | 195 | 196 | 197 | 198 | 199 | 200 |
| 11 | 201 | 202 | 203 | 204 | 205 | 206 | 207 | 208 | 209 | 210 | 211 | 212 | 213 | 214 | 215 | 216 | 217 | 218 | 219 | 220 |
| 12 | 221 | 222 | 223 | 224 | 225 | 226 | 227 | 228 | 229 | 230 | 231 | 232 | 233 | 234 | 235 | 236 | 237 | 238 | 239 | 240 |
| 13 | 241 | 242 | 243 | 244 | 245 | 246 | 247 | 248 | 249 | 250 | 251 | 252 | 253 | 254 | 255 | 256 | 257 | 258 | 259 | 260 |
| 14 | 261 | 262 | 263 | 264 | 265 | 266 | 267 | 268 | 269 | 270 | 271 | 272 | 273 | 274 | 275 | 276 | 277 | 278 | 279 | 280 |
| 15 | 281 | 282 | 283 | 284 | 285 | 286 | 287 | 288 | 289 | 290 | 291 | 292 | 293 | 294 | 295 | 296 | 297 | 298 | 299 | 300 |
| 16 | 301 | 302 | 303 | 304 | 305 | 306 | 307 | 308 | 309 | 310 | 311 | 312 | 313 | 314 | 315 | 316 | 317 | 318 | 319 | 320 |

| # | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|

Fig. 3

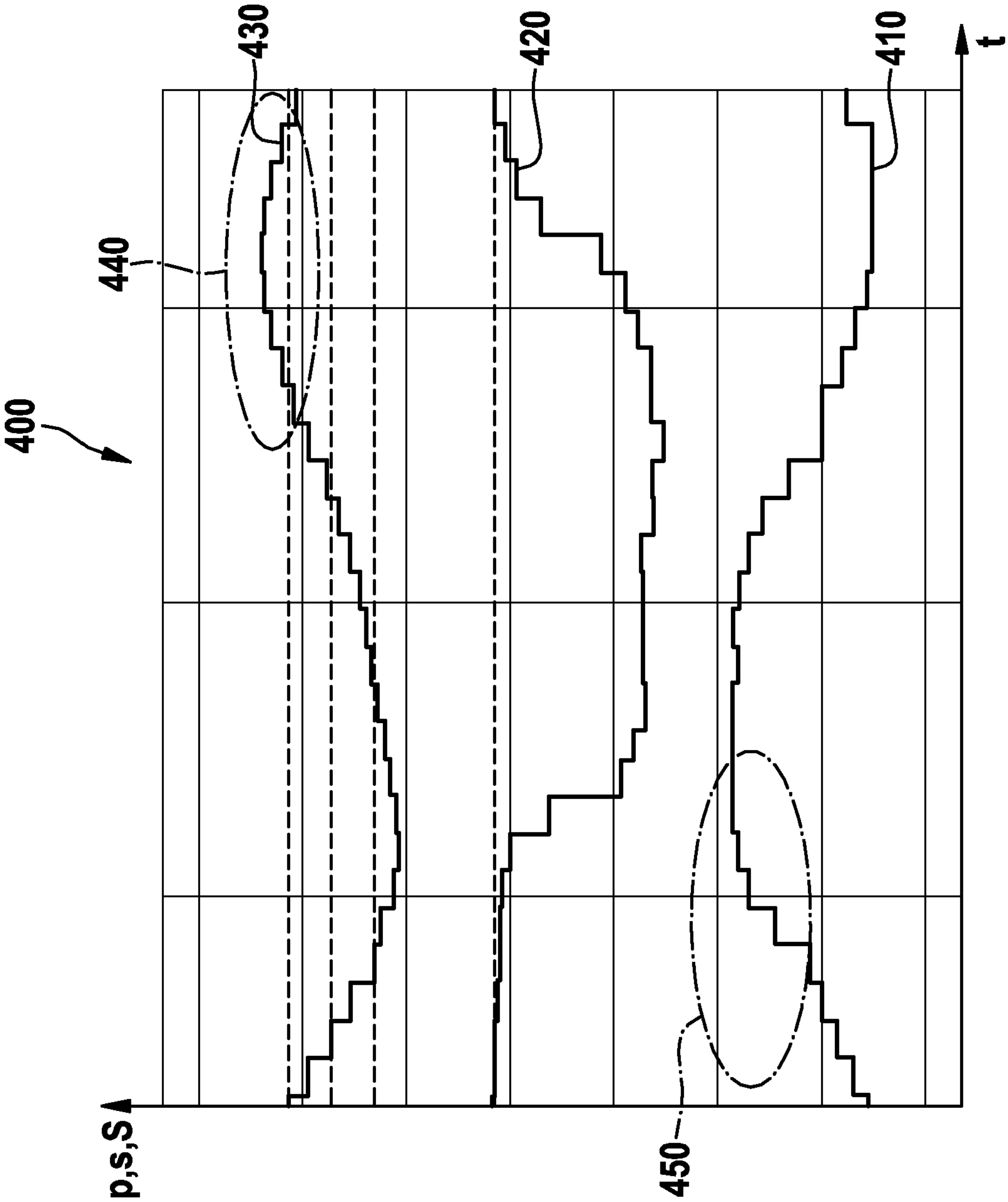


Fig. 4

| | | | | | | | | | | | | | | | | | | | |
|---|---|---|---|---|---|---|---|---|---|---|---|---|---|---|---|---|---|---|---|
| 1 | 1 | 1 | 1 | 1 | 1 | 1 | 1 | 1 | 1 | 1 | 1 | 1 | 1 | 1 | 1 | 1 | 1 | 1 | 1 |
| 1 | 1 | 1 | 1 | 1 | 1 | 1 | 1 | 1 | 1 | 1 | 1 | 1 | 1 | 1 | 1 | 1 | 1 | 1 | 1 |
| 1 | 1 | 1 | 1 | 1 | 1 | 1 | 1 | 1 | 1 | 1 | 1 | 1 | 1 | 1 | 1 | 1 | 1 | 1 | 1 |
| 1 | 1 | 1 | 1 | 1 | 1 | 1 | 1 | 1 | 1 | 1 | 1 | 0,79980 | 1 | 1 | 1 | 1 | 1 | 1 | 1 |
| 1 | 1 | 1 | 1 | 1 | 1 | 1 | 1 | 1 | 1 | 1 | 0,79980 | 0,79980 | 1 | 1 | 1 | 1 | 0,79980 | 1 | 1 |
| 1 | 1 | 1 | 1 | 1 | 1 | 1 | 1 | 0,79980 | 0,59960 | 0,79980 | 0,20019 | 0,59960 | 0,59960 | 1 | 1 | 1 | 1 | 1 | 1 |
| 1 | 1 | 1 | 1 | 1 | 1 | 0,79980 | 0,79980 | 0,59960 | 1 | 0,39941 | 0,79980 | 0,79980 | 0,79980 | 1 | 1 | 1 | 1 | 1 | 1 |
| 1 | 1 | 1 | 1 | 1 | 0,79980 | 1 | 0,79980 | 0,79980 | 0,79980 | 1 | 1 | 1 | 1 | 1 | 1 | 1 | 1 | 1 | 1 |
| 1 | 1 | 1 | 1 | 1 | 1 | 0,79980 | 0,79980 | 1 | 0,79980 | 0,79980 | 0,79980 | 1 | 1 | 1 | 1 | 1 | 1 | 1 | 1 |
| 1 | 1 | 1 | 1 | 1 | 0,59960 | 1 | 1 | 0,79980 | 0,79980 | 1 | 1 | 0,79980 | 1 | 1 | 0,79980 | 1 | 1 | 1 | 1 |
| 1 | 1 | 1 | 1 | 1 | 1 | 1 | 1 | 1 | 0,79980 | 0,59960 | 0,79980 | 0,79980 | 1 | 1 | 1 | 1 | 1 | 1 | 1 |
| 1 | 1 | 1 | 1 | 1 | 1 | 0,79980 | 0,59960 | 0,79980 | 0,79980 | 0,79980 | 0,79980 | 0,79980 | 1 | 0,79980 | 1 | 1 | 1 | 1 | 1 |
| 1 | 1 | 1 | 1 | 1 | 0,59960 | 1 | 1 | 0,39941 | 0,59960 | 0,59960 | 0,39941 | 0,59960 | 1 | 1 | 1 | 0,59960 | 1 | 1 | 1 |
| 1 | 1 | 1 | 1 | 1 | 0,79980 | 0,59960 | 0,79980 | 1 | 1 | 0,20019 | 1 | 0,79980 | 1 | 0,79980 | 1 | 1 | 1 | 1 | 1 |
| 1 | 0,39941 | 0,20019 | 1 | 0,59960 | 0,79980 | 1 | 0,59960 | 0,39941 | 0,79980 | 0,79980 | 1 | 1 | 1 | 0,59960 | 1 | 1 | 1 | 1 | 1 |
| 1 | 0,20019 | 0,59960 | 0,79980 | 0,79980 | 0,79980 | 1 | 0,79980 | 1 | 1 | 1 | 1 | 1 | 1 | 1 | 0,79980 | 1 | 0,79980 | 1 | 1 |

510

×

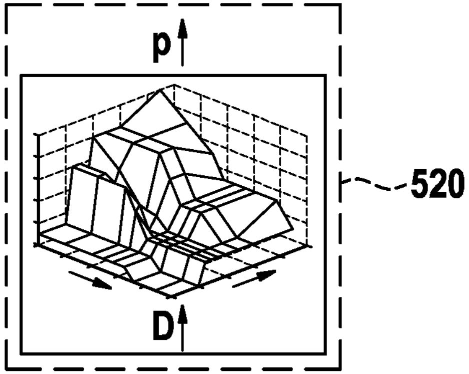


520

Fig. 5

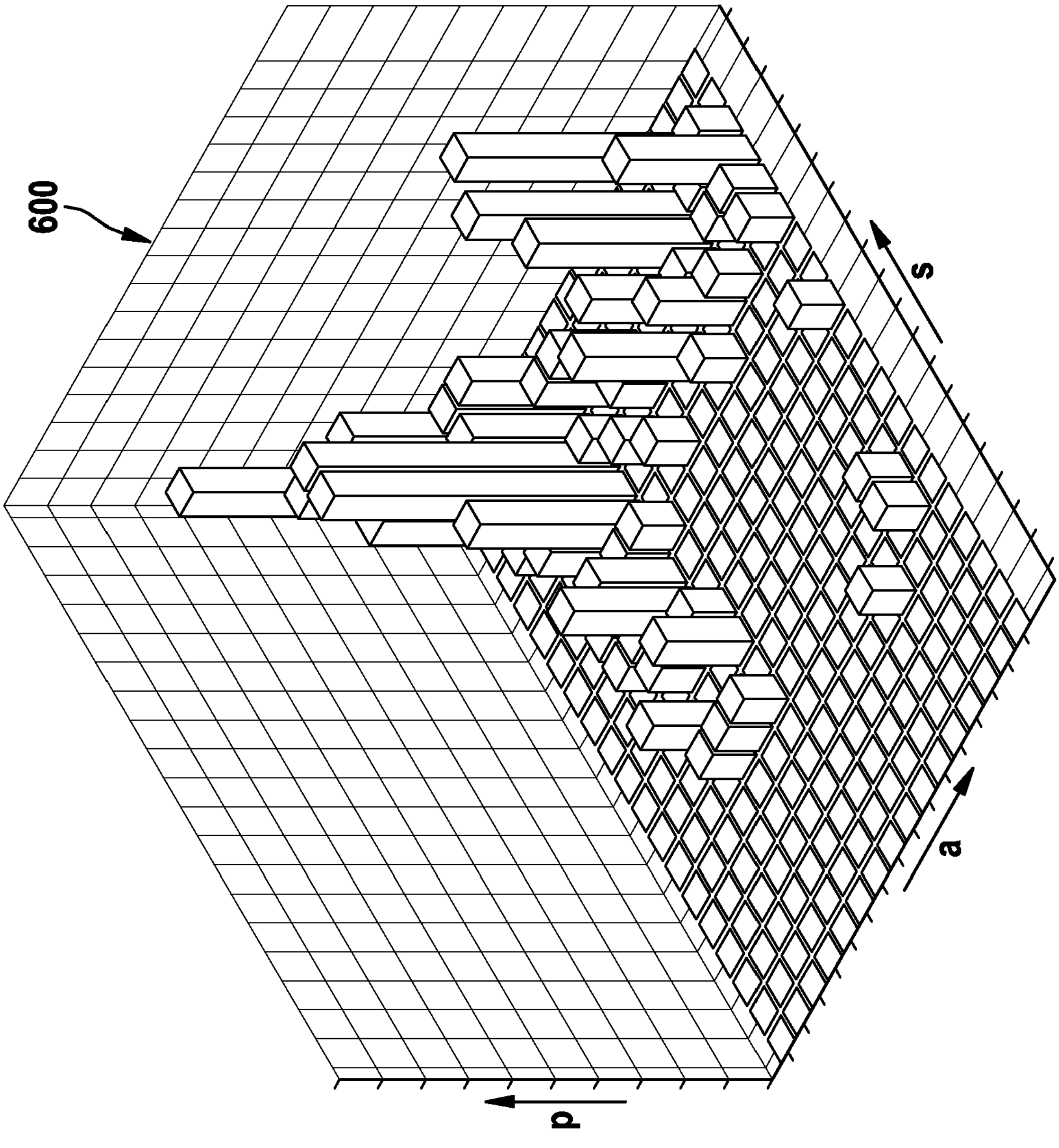


Fig. 6

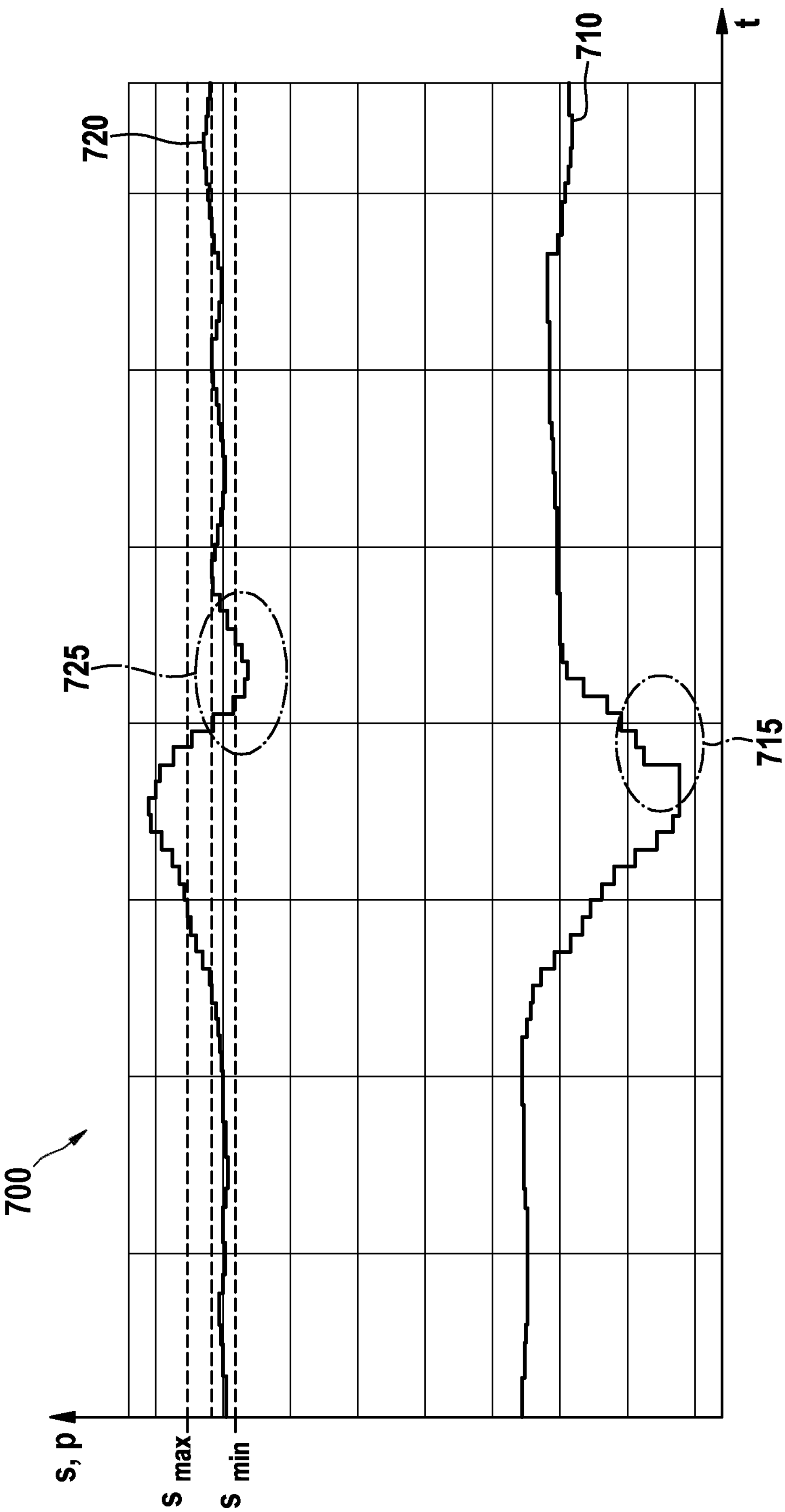


Fig. 7

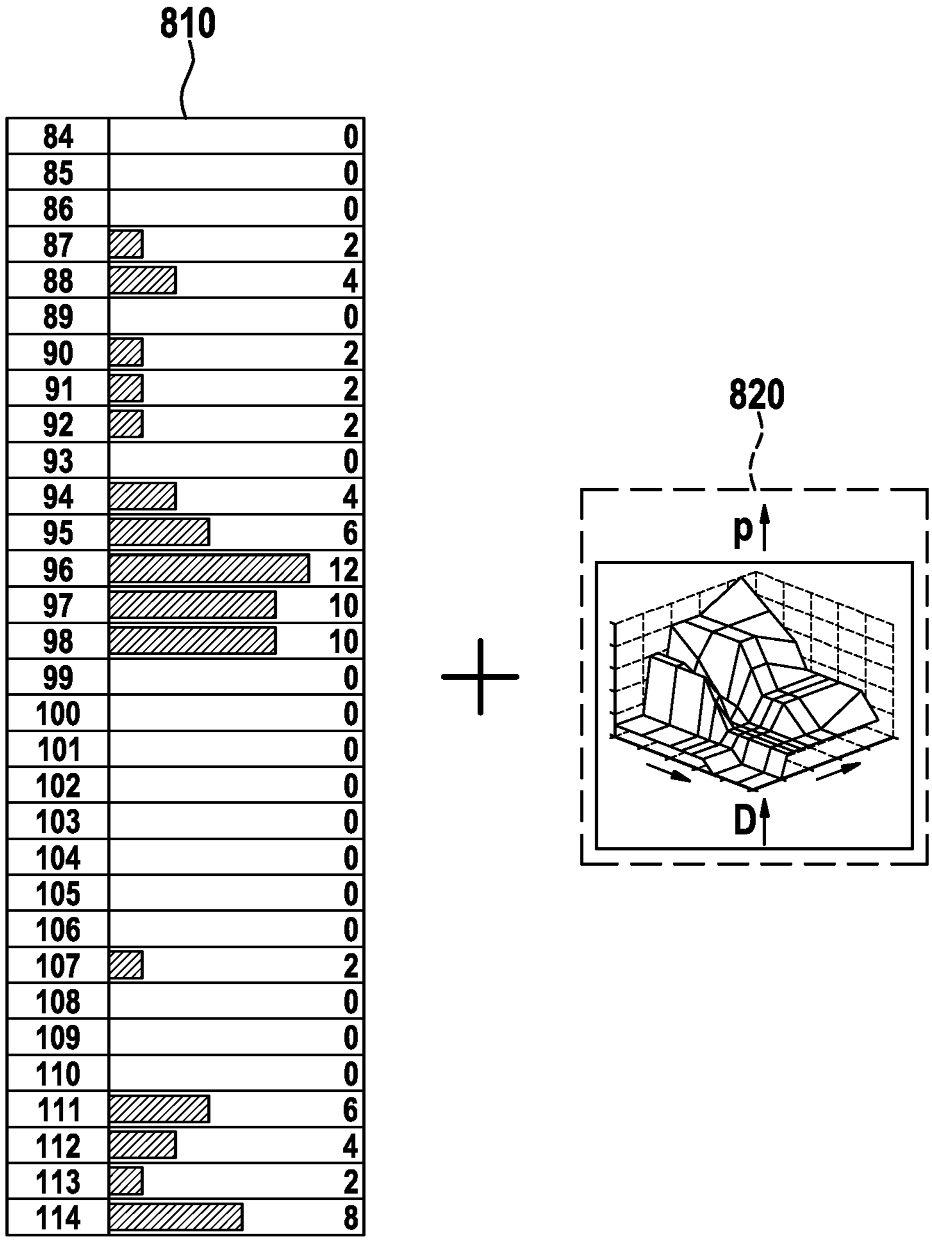
810
84 0
85 0
86 0
87 2
88 4
89 0
90 2
91 2
92 2
93 0
94 4
95 6
96 12
97 10
98 10
99 0
100 0
101 0
102 0
103 0
104 0
105 0
106 0
107 2
108 0
109 0
110 0
111 6
112 4
113 2
114 8
820
p
D

Fig. 8

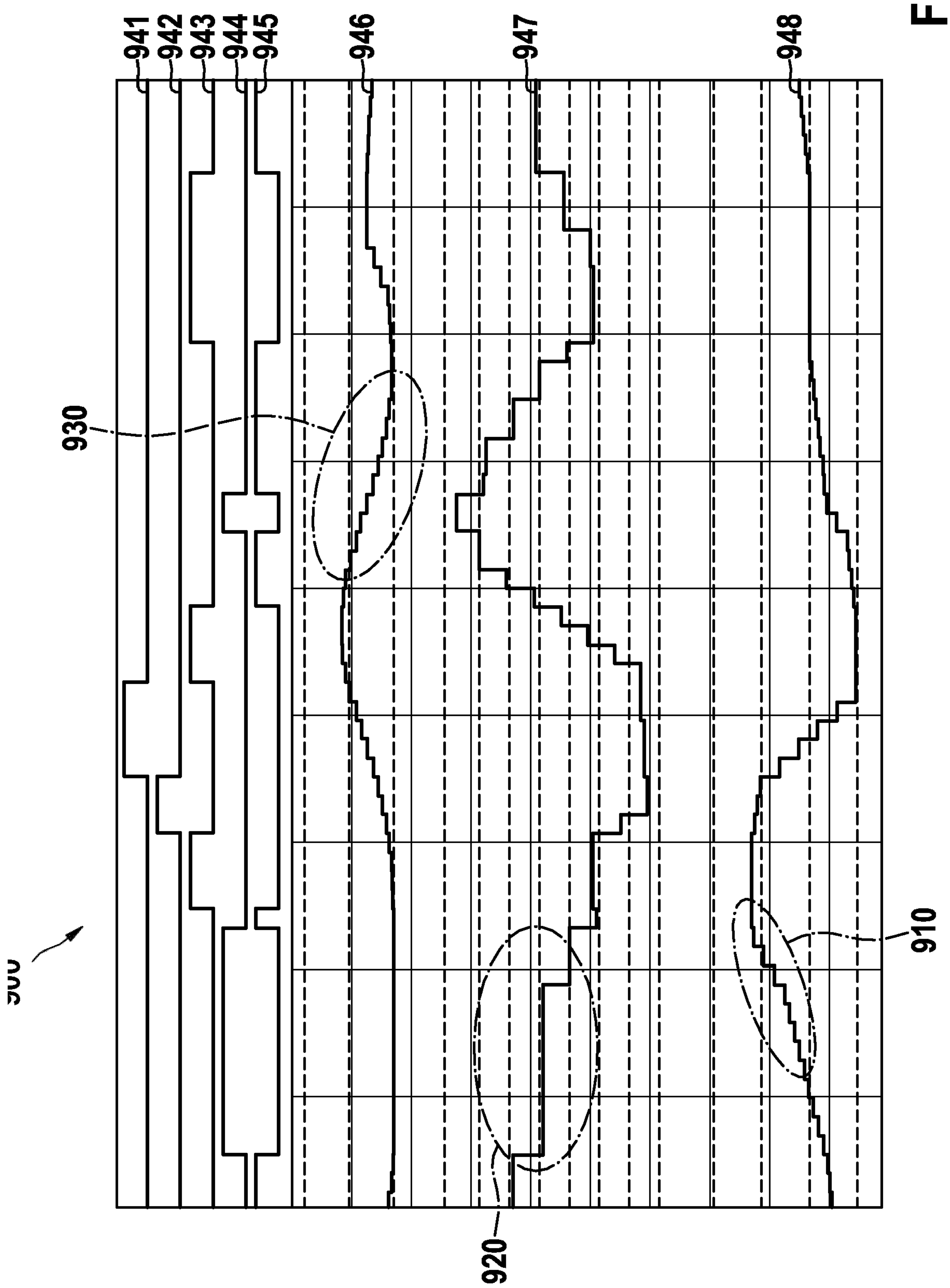


Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20150224970 A1